# EUROPEAN PATENT APPLICATION

(11) **EP 4 730 053 A1**
(43) Date of publication of application: **22.04.2026**
(21) Application number: 24843467.2
(22) Date of filing: 15.07.2024
(51) Int. Cl.: G04G 17/04, G04G 17/08, G06F 1/16

(54) **ELECTRONIC DEVICE COMPRISING MOLDING PORTION**

(30) Priority: 20.07.2023 KR 20230094474; 25.08.2023 KR 20230111805
(71) Applicant: Samsung Electronics Co., Ltd., Suwon-si, Gyeonggi-do 16677 (KR)
(72) Inventor: CHOI, Bongsuk, Suwon-si, Gyeonggi-do 16677 (KR); LEE, Geuna, Suwon-si, Gyeonggi-do 16677 (KR); OH, Seunghee, Suwon-si, Gyeonggi-do 16677 (KR)
(74) Representative: Appleyard Lees IP LLP
(86) International application number: PCT/KR2024/010125
(87) International publication number: WO 2025/018751

(57) **Abstract**

An electronic device according to an embodiment of the present disclosure comprises: a support portion comprising at least one seating space; a window cover arranged in the seating space; a display which is arranged in the seating space and on one surface of the window cover and comprises a bending portion formed at the end portion thereof; and a molding portion which surrounds the end portion of the display, is at least partially arranged on one surface of the window cover, and is spaced apart from the inner surface of the support portion, wherein the molding portion comprises a first region which extends in a direction perpendicular to one surface of the window cover, and a second region having at least one surface formed to be inclined with respect to the first region. In addition, a first length of the first region extending from the window cover in the height direction of the electronic device may be greater than a second length that is a length from the window cover to the center of the bending portion.

## Description

### [Technical Field]

The present disclosure relates to an electronic device including a molding part.

### [Background Art]

An electronic device (e.g., wearable electronic device) may include a display and a molding part extended along the perimeter of the display. The molding part may be formed to surround the bending portion of the display. The bending portion of the display may be the region where the display bends and extends from the end portion of the display.

The electronic device may include a molding part extended along the perimeter of the display to thereby expand the display area (active area) being the area on the display where an image is displayed.

### [Disclosure of Invention]

### [Technical Problem]

To enhance the aesthetics of the electronic device (e.g., wearable electronic device), if the support part (e.g., housing) is formed with a thin thickness, at least a portion of the inner surface of the support part may be formed as a slope surface so as to reinforce the rigidity of the support part. If at least a portion of the inner surface of the support part is formed as a slope surface, at least a portion of the molding part located on the inner side of the support part may also be formed as a slope surface.

As the molding part forms a slope surface, the straight-line section of the molding part extended from the window cover may be shortened. If the straight-line section of the molding part is formed short, eddies and bubbles caused by eddies may be formed during the formation process of the molding part, which may cause the appearance of the molding part to be poor.

During the formation process of the molding part, if the opening (e.g., opening for injecting molding material) in the guide member (e.g., silicone cap) for forming the molding part is large, the pressure applied to the opening may increase, so that a portion of the display (e.g., bonding layer) may be excessively pressed. Additionally, in the formation process of the molding part, if the bending portion of the display and the molding part formed in a region opposite to the bending portion have asymmetrical shapes, a portion of the display (e.g., bonding layer) may be excessively pressed due to the pressure difference between the two.

### [Solution to Problem]

An electronic device according to an embodiment of the disclosure may include: support parts including at least one seating space; a window cover disposed in the seating space; a display that is disposed in the seating space and one surface of the window cover and includes a bending portion formed at the end portion; and a molding part that is disposed to surround the end portion of the display, have at least a portion disposed on one surface of the window cover, and be spaced apart from the inner surface of the support parts, wherein the molding part may include a first region extended in a direction perpendicular to one surface of the window cover, and a second region having at least one surface formed to be inclined with respect to the first region, and wherein the first length, which is the length that the first region extends in the height direction of the electronic device from the window cover, may be formed longer than the second length, which is the length from the window cover 311 to the center of the bending portion.

An electronic device according to an embodiment of the disclosure may include: a display part including a bending portion formed at an end portion; support parts disposed to surround the outer perimeter of the display part; and a molding part that is disposed to surround the end portion of the display part and be spaced apart from the inner surface of the support parts, wherein the molding part may include a first region extended in a direction perpendicular to one surface of the display part, and a second region including a molding slope surface formed to be inclined relative to the first region, wherein the support parts may include a support slope surface facing the second region of the molding part, wherein the first region may be extended from one surface of the display part to a greater distance than the center of the bending portion in the height direction of the electronic device, and wherein the first angle of the molding slope surface may be formed to be larger than the second angle of the support slope surface.

### [Advantageous Effects of Invention]

In the electronic device according to an embodiment of the disclosure, the straight-line section of the molding part may be formed to be longer than a preset distance, thereby reducing or preventing generation of bubbles during the formation process of the molding part.

In the electronic device according to an embodiment of the disclosure, a specific region of the support part (e.g., housing) may be formed thicker than other regions, thereby improving the rigidity of the support part while keeping the appearance of the support part thin.

The electronic device according to an embodiment of the disclosure may reduce or prevent excessive pressing on a region of the display during the formation process of the molding part.

### [Brief Description of Drawings]

FIG. 1 is a block diagram of an electronic device in a network environment according to an embodiment.
FIGS. 2A and 2B are perspective views of an electronic device according to an embodiment of the disclosure.
FIG. 3 is an exploded perspective view of an electronic device according to an embodiment of the disclosure.
FIGS. 4A and 4B are views showing a display part, support part, and rear plate according to an embodiment of the disclosure.
FIG. 5A and FIG. 5B are views showing a display part, support part, and molding part according to an embodiment of the disclosure.
FIG. 6A and FIG. 6B are views illustrating a state in which a guide member is placed on the display part during the formation process of the molding part according to an embodiment of the disclosure.
FIG. 7 is a view showing a display and blocking part according to an embodiment of the disclosure.
FIGS. 8A, 8B and 8C are views illustrating the formation of a blocking part and molding part according to an embodiment of the disclosure.
FIG. 9 is a view showing a display part, molding part, and blocking part seen from cross-section C-C' in FIG. 8C.
FIG. 10 is a view showing a display and molding part according to an embodiment of the disclosure.

### [Mode for the Invention]

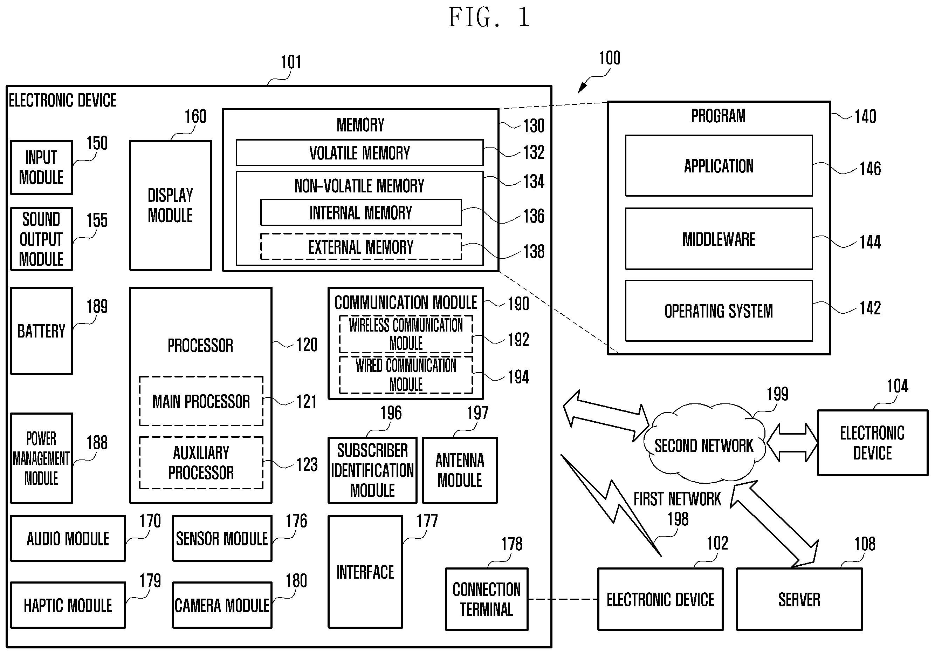

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

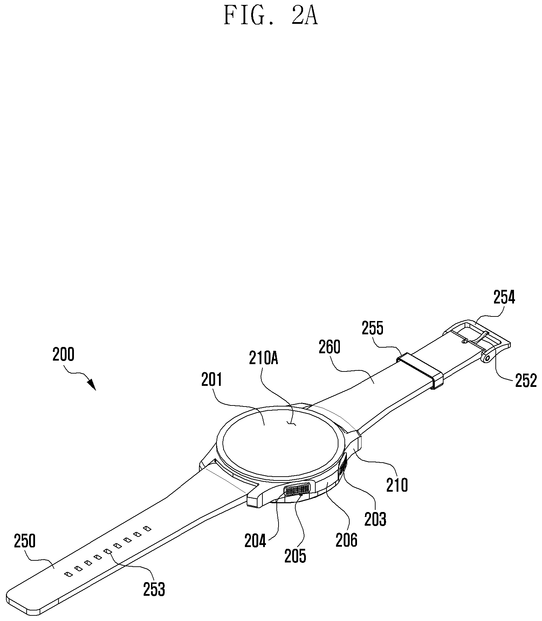

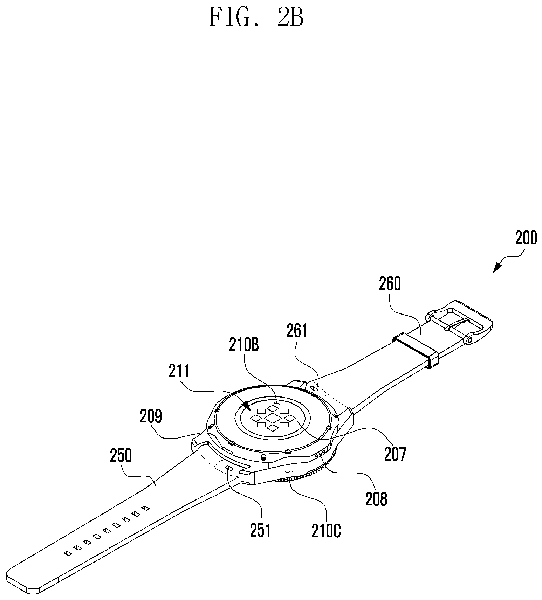

FIG. 2A is a front perspective view of an electronic device 200 according to an embodiment. FIG. 2B is a rear perspective view of the electronic device 200 according to an embodiment.

The electronic device 200 of FIGS. 2A and 2B may refer to the electronic device 101 of FIG. 1 or may include at least some of the components of the electronic device 101 of FIG. 1.

With reference to FIGS. 2A and 2B, the electronic device 200 according to an embodiment may include: a housing 210 including a first surface (or, front surface) 210A, a second surface (or, rear surface) 210B, and a side surface 210C surrounding the space between the first surface 210A and the second surface 210B; and fastening members 250 and 260 connected to at least a portion of the housing 210 and configured to detachably fasten the electronic device 200 to a body part (e.g., wrist, ankle) of the user. The fastening members 250 and 260 may be, for example, a strap wound around the user's wrist to fix the electronic device 200. In an embodiment (not shown), the housing may refer to a structure forming some of the first surface 210A, the second surface 210B, and the side surface 210C in FIG. 2A. According to an embodiment, the first surface 210A may be formed by a front plate 201 that is substantially transparent at least in part (e.g., glass plate containing various coating layers, or polymer plate). The second surface 210B may be formed by a rear plate 207. The rear plate 207 may be made of, for example, coated or colored glass, ceramic, polymer, metal (e.g., aluminum, stainless steel (STS), or magnesium), or a combination thereof. The side surface 210C may be formed by a lateral bezel structure (or, lateral member) 206 that is coupled to the front plate 201 and the rear plate207 and contains metal and/or polymer. In a certain embodiment, the rear plate 207 and the lateral bezel structure 206 may be integrally formed and contain the same material (e.g., metal material such as aluminum). The fastening members 250 and 260 may be made of various materials and formed in various shapes. They may be formed as a single body or as plural unit links that are movable with each other, by woven material, leather, rubber, synthetic resin, metal, ceramic, or a combination thereof.

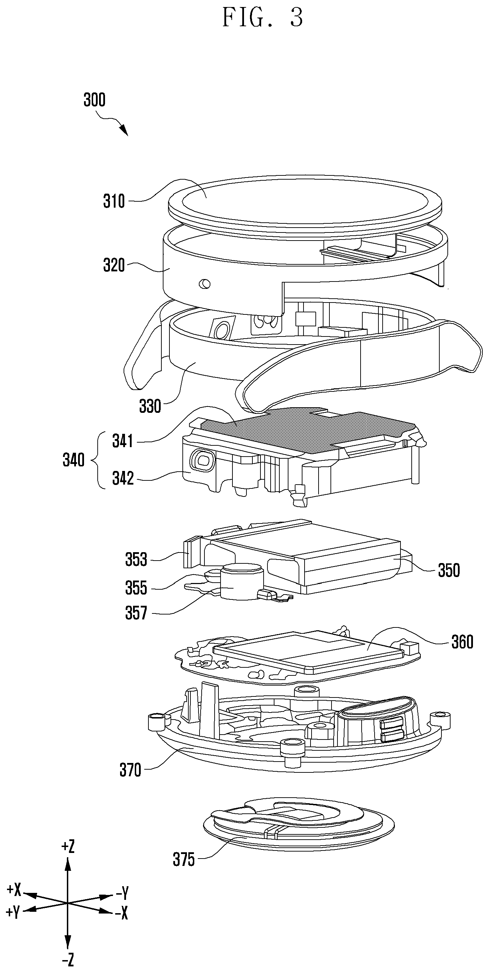

According to an embodiment, the electronic device 200 may include at least one of a display (310 in FIG. 3), an audio module (205 and 208), a sensor module 211, key input devices 203 and 204, or a connector hole 209. In a certain embodiment, at least one of the components (e.g., key input device 203 or 204, connector hole 209, and sensor module 211) may be removed from the electronic device 200, or a different component may be added to the electronic device 200.

The display (310 in FIG. 3) may be visually exposed through, for example, a significant portion of the front plate 201. The display 310 may have a shape corresponding to the shape of the front plate 201 and may have a shape such as a circle, an ellipse, or a polygon. The display 310 may be disposed in combination with or adjacent to a touch sensing circuit, a pressure sensor capable of measuring the intensity (pressure) of a touch, and/or a fingerprint sensor.

The audio module 205 and 208 may include a microphone hole 205 and a speaker hole 208. In the microphone hole 205, a microphone for picking up external sounds may be disposed therein, and plural microphones may be arranged to sense the direction of sound in a certain embodiment. The speaker hole 208 can be used for an external speaker and a call receiver. In a certain embodiment, the speaker hole 208 and the microphone hole 203 may be implemented as a single hole, or a speaker (e.g., piezo speaker) may be included without the speaker hole 208.

The sensor module 211 may generate an electrical signal or data value corresponding to an internal operating state of the electronic device 200 or an external environmental state. The sensor module 211 may include, for example, a biometric sensor module (e.g., HRM sensor, oxygen saturation sensor, and/or blood glucose sensor) disposed toward the second surface 210B of the housing 210. The electronic device 200 may further include a sensor module (not shown) including at least one of, for example, a gesture sensor, a gyro sensor, an air pressure sensor, a magnetic sensor, an acceleration sensor, a grip sensor, a color sensor, an infrared (IR) sensor, a biometric sensor, a temperature sensor, a humidity sensor, or an illuminance sensor.

The key input devices 203 and 204 may include side key buttons 203 and 204 disposed on the side surface 210C of the housing 210. In an embodiment, the electronic device 200 may not include some or all of the key input devices 203 and 204 described above, and the key input device 203 or 204 that is not included may be implemented in the form of a soft key or touch key on the display 220. The key input devices 203 and 204 according to an embodiment may include a wheel key (not shown) that is disposed on the first surface 210A of the housing 210 to be rotatable in at least one direction.

The connector hole 209 may accommodate a connector (e.g., USB connector) for transmitting and receiving power and/or data to and from an external electronic device, and may include another connector hole (not shown) that can accommodate a connector for transmitting and receiving an audio signal to and from an external electronic device. The electronic device 200 may further include, for example, a connector cover (not shown) that covers at least a portion of the connector hole 209 and blocks foreign substances from entering the connector hole 209.

The fastening members 250 and 260 may be detachably fastened to at least a portion of the housing 210 by using locking members 251 and 261. The fastening members 250 and 260 may include one or more of a fixing member 252, fixing member fastening holes 253, a band guide member 254, and a band fixing ring 255.

The fixing member 252 may be configured to fix the housing 210 and the fastening members 250 and 260 to a body part (e.g., wrist, or ankle) of the user. The fixing member fastening holes 253 may fix the housing 210 and the fastening members 250 and 260 to a body part of the user in correspondence to the fixing member 252. The band guide member 254 may be configured to limit the range of movement of the fixing member 252 when the fixing member 252 engages with a fixing member fastening hole 253, so that the fastening members 250 and 260 may be fastened in close contact to a body part of the user. The band fixing ring 255 may limit the range of movement of the fastening members 250 and 260 while the fixing member 252 and the fixing member fastening hole 253 are fastened.

FIG. 3 is an exploded perspective view of an electronic device 300 according to an embodiment of the disclosure.

In describing the electronic device 300 according to an embodiment of the disclosure, the width direction of the electronic device 300 may refer to the X-axis direction, and the length direction of the electronic device 300 may refer to the Y-axis direction. The height direction of the electronic device 300 may refer to the Z-axis direction.

The electronic device 300 according to an embodiment of the disclosure may include a display part 310, a first support part 320, a second support part 330, a support member 340, a battery 350, a flexible board 353, a sensor part 355, a driving part 357, a printed circuit board 360, a rear plate 370, and/or a biometric sensor module 375.

The electronic device 300 of FIG. 3 may refer to the electronic device 101 of FIG. 1, or may include at least some of the components of the electronic device 101 of FIG. 1.

The electronic device 300 of FIG. 3 may refer to the electronic device 200 of FIGS. 2A and 2B, or may include at least some of the components of the electronic device 200 of FIGS. 2A and 2B. For example, the electronic device 300 according to an embodiment may include the fastening members 250 and 260 illustrated in FIGS. 2A and 2B.

At least one of the components of the electronic device 300 of FIG. 3 may be substantially identical to at least one of the components of the electronic device 200 of FIGS. 2A and 2B, and a repeated description of a component that is substantially identical to a component of the electronic device 200 of FIGS. 2A and 2B may be omitted.

In an embodiment, the display part 310 may visually provide information to the outside of the electronic device 300. In FIG. 3, the display part 310 is depicted as circular, but its shape is not limited thereto and may be oval or polygonal. The display part 310 may be disposed in combination or adjacency with a touch sensing circuit, a pressure sensor, and/or a fingerprint sensor.

In an embodiment, the support parts 320 and 330 may be substantially the same component as the housing 210 in FIGS. 2A and 2B. The support parts 320 and 330 may be a component that forms the external appearance of the electronic device 300.

In an embodiment, the support parts 320 and 330 may include a first support part 320 and/or a second support part 330. The first support part 320 and the second support part 330 may be arranged to surround the outer perimeter of the display part 310. For example, when the display part 310 is formed in a circular shape, the first support part 320 may be disposed to be extended in a corresponding circular shape and to surround the outer perimeter of the display part 310.

In an embodiment, the first support part 320 may be seated on at least a portion of the second support part 330. The second support part 330 may be coupled to the fastening members 250 and 260 illustrated in FIGS. 2A and 2B on one side and/or the other side.

In FIG. 3, the second support part 330 is depicted as being manufactured as a separate component from the first support part 320 and disposed on the first support part 320, but this may be illustrative. For example, the second support part 330 and the first support part 320 may be a single component rather than separate components. The second support part 330 according to an embodiment may be manufactured as an integral component with the first support part 320 rather than as a separate component from the first support part 320.

In an embodiment, the support member 340 may serve to provide a space in which other components of the electronic device 300 such as the battery 350 are to be arranged, and to support other components. In an embodiment, the support member 340 may be made of, for example, a metallic material and/or a non-metallic (e.g., polymer) material.

In one embodiment, the support member (340) may include a plate member 341 and/or a seating member 342. The display part 310 may be disposed on the plate member 341. The battery 350 may be disposed in a space formed inside the seating member 342.

In an embodiment, the battery 350 may be a mechanism for supplying power to at least one component of the electronic device 300. For example, the battery 350 may include a non-rechargeable primary cell, a rechargeable secondary cell, or a fuel cell. The battery 350 may be integrally disposed inside the electronic device 300, or may be disposed detachably from the electronic device 300.

In an embodiment, the flexible board 353 may be a flexible printed circuit board electrically connected to the key input devices 203 and 204 in FIG. 2A. In an embodiment, the sensor part 355 may sense the operating state of the electronic device 300 or an external environmental state (e.g., user status) and generate an electrical signal or data value corresponding to the sensed state. For example, the sensor part 355 may include a barometric pressure sensor. In one embodiment, the driving part 357 may convert an electrical signal into a user-perceivable stimulus. For example, the driving part 357 may include a motor capable of converting an electrical signal into a mechanical stimulus.

In an embodiment, a processor (e.g., processor 120 in FIG. 1), a memory (e.g., memory 130 in FIG. 1), and/or an interface (e.g., interface 177 in FIG. 1) may be mounted on the printed circuit board 360. The processor may include, for example, one or more of a central processing unit, an application processor, a graphics processing unit (GPU), a sensor processor, or a communication processor.

In an embodiment, the rear plate 370 may be substantially the same component as the rear plate 207 in FIG. 2B. Within the space formed by the display part 310, support parts 320 and 330, and rear plate 370, other components of the electronic device 300 (e.g., printed circuit board 360, battery 370) may be arranged.

In an embodiment, the biometric sensor module 375 may be substantially the same component as the sensor module 211 in FIG. 2B. The biometric sensor module 375 may include at least one sensor configured to obtain biometric information (e.g., heart rate, body temperature) of the user. The biometric sensor module 375 may be disposed on one surface of the rear plate 370 (e.g., surface facing in negative Z-axis).

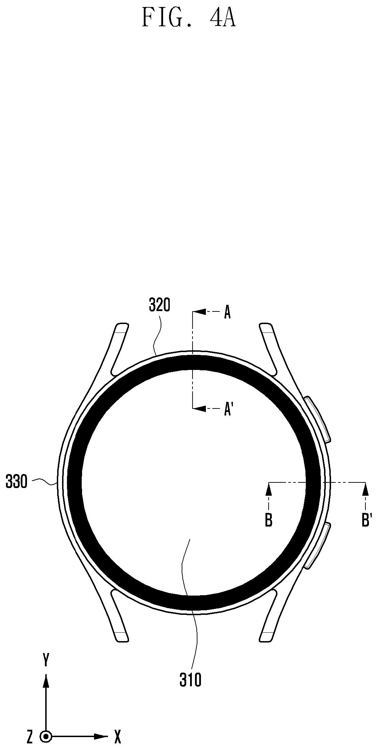

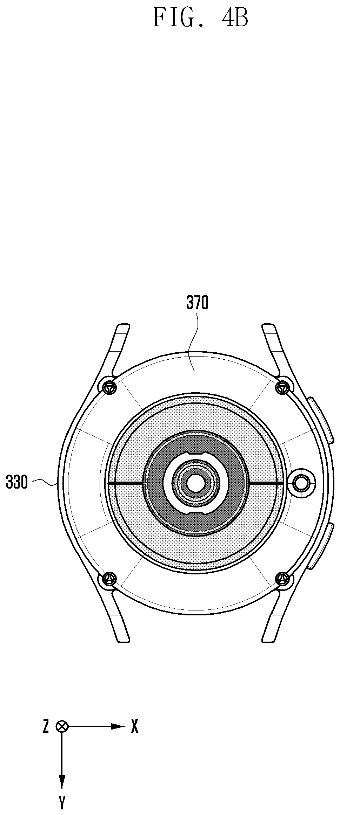

FIG. 4A and FIG. 4B are views illustrating the display part 310, support parts 320 and 330, and rear plate 370 according to an embodiment of the disclosure.

With reference to FIGS. 4A and 4B, at least a portion of the display part 310 may be surrounded by the first support part 320 and the second support part 330.

In an embodiment, the first support part 320 may be extended along the perimeter of the display part 310. For example, if the display part 310 is extended in a circular perimeter shape, the first support part 320 may be extended in a circular perimeter shape along the outer edge of the display part 310.

In an embodiment, the second support part 330 may be disposed on at least a portion of the perimeter of the display part 310. For example, with reference to FIG. 4A, the second support part 330 may be disposed on one side of the display part 310 (e.g., positive X-axis direction side of the display part 310) and the other side (e.g., negative X-axis direction side of the display part 310).

In an embodiment, the second support part 330 may be disposed on at least a portion of the perimeter of the rear plate 370. For example, with reference to FIG. 4B, the second support part 330 may be disposed on one side of the rear plate 370 (e.g., positive X-axis direction side of the rear plate 370) and the other side (e.g., negative X-axis direction side of the rear plate 370).

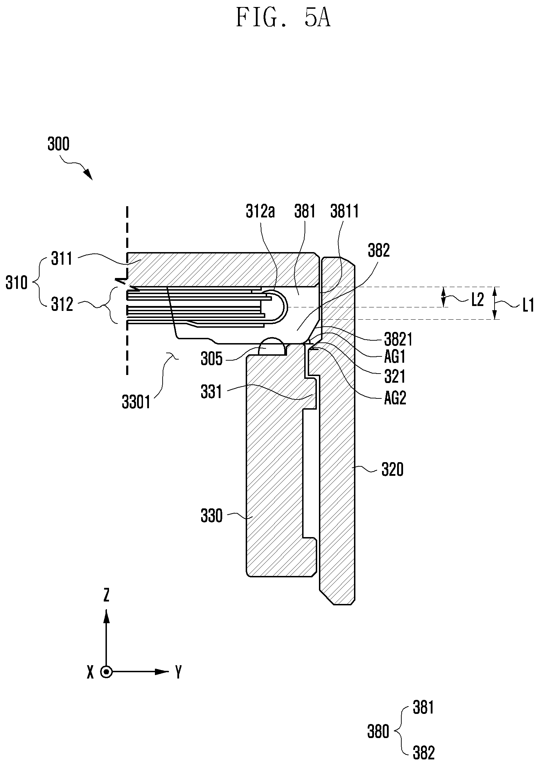

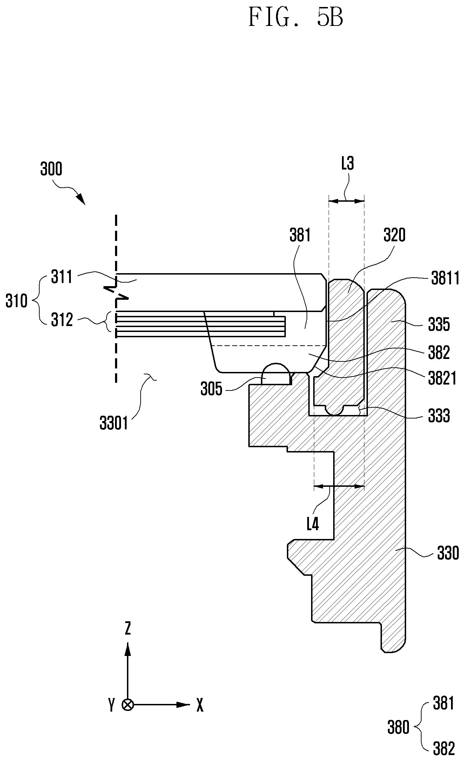

FIG. 5A and FIG. 5B are views illustrating the display part 310, support parts 320 and 330, and molding part 380 according to an embodiment of the disclosure.

FIG. 5A may be a view of the electronic device 300 seen from cross-section A-A' in FIG. 4A. FIG. 5B may be a view of the electronic device 300 seen from cross-section B-B' in FIG. 4B.

In an embodiment, the support parts 320 and 330 may include a first support part 320 and/or a second support part 330.

In an embodiment, the support parts 320 and 330 may include a seating space 3301 in which other components of the electronic device 300 may be seated. For example, the display 310 may be disposed in the seating space 3301 formed by the support parts 320 and 330.

In an embodiment, the display part 310 may include a window cover 311 and/or a display 312. The display part 310 may be disposed in the seating space 3301.

In an embodiment, the display part 310 may be arranged to be surrounded by the support parts 320 and 330. For example, with reference to FIGS. 5A and 5B, the support parts 320 and 330 may be arranged to surround at least some of the end portion of the display part 310.

In an embodiment, the display 312 may be disposed on one surface of the window cover 311. For example, the display 312 may be disposed on a surface of the window cover 311 that faces the interior of the electronic device 300 (e.g., surface facing in negative Z-axis direction).

In an embodiment, the display 312 may include at least one layer. For example, the display 312 may include a panel layer including a display panel, a protective layer for protecting the panel layer, a compensation layer for compensating for step differences between layers, and/or a bonding layer for bonding layers together.

In an embodiment, the display 312 may include a bending portion 312a at an end portion. The bending portion 312a of the display 312 may be a portion where the display panel is bent and extended from the end portion of the display 312 (e.g., end portion facing in positive Y-axis direction).

In an embodiment, the molding part 380 may be disposed at the end portion of the display 312.

In an embodiment, a molding material (e.g., resin) may be placed along the perimeter of the display part 310 and then cured to form the molding part 380.

In an embodiment, the molding part 380 may be disposed to surround the end portion of the display 312. The molding part 380 may be arranged to surround the bending portion 312a of the display 312 and fill the internal space of the bending portion 312a formed by the bending portion 312a.

In an embodiment, at least a portion of the molding part 380 may be disposed on one surface of the window cover 311. For example, the molding part 380 may be disposed on a surface of the window cover 311 that faces the interior of the electronic device 300 (e.g., surface facing in negative Z-axis direction).

In an embodiment, the molding part 380 may be disposed to be spaced apart from the inner surface of the first support part 320. The inner surface of the first support part 320 may refer to a surface of the first support part 320 that faces the interior of the electronic device 300.

In an embodiment, the molding part 380 may include a first region 381 and/or a second region 382.

In an embodiment, the first region 381 may be a region extended in a direction substantially perpendicular to one surface of the window cover 311. For example, the end surface 3811 of the first region 381 may be extended in a direction substantially perpendicular to one surface of the window cover 311.

In an embodiment, the first region 381 may be disposed to surround the bending portion 312a of the display 312. For example, the first region 381 may be disposed in the internal space of the bending portion 312a and on the outside of the bending portion 312a.

In an embodiment, the length by which the first region 381 of the molding part 380 extends in a direction substantially perpendicular to one surface of the window cover 311 (e.g., Z-axis direction) may vary based on the thickness of the bending portion 312a (e.g., length of the bending portion 312a in Z-axis direction). For example, the first region 381 may extend longer in a direction substantially perpendicular to one surface of the window cover 311 compared to the center of the bending portion 312a. With reference to FIG. 5A, the first region 381 may extend from one surface of the window cover 311 by a first length L1. The center of the bending portion 312a may have a length of a second length L2 from one surface of the window cover 311. The center of the bending portion 312a may refer to the point of the bending portion 312a closest to the first support part 320 in the Y-axis direction. The first length L1 may be formed to be longer than the second length L2. For example, the first length L1 may be approximately 0.6 mm, and the second length L2 may be approximately 0.42 mm.

If the first length L1 is formed to be shorter than the second length L2, the width of the molding part 380 (e.g., the length by which the first region 381 extends toward the first support part 320) becomes narrower; in this case, during the formation process of the molding part 380, eddies may be generated and these eddies may result in generation of air bubbles. If air bubbles are generated during the formation process of the molding part 380, it may be difficult to form the molding part 380 in a designated shape. In the electronic device 300 according to an embodiment, the first length L1 may be formed longer than the second length L2 so as to reduce or prevent the generation of air bubbles.

In an embodiment, at least a portion of the second region 382 may be formed to be inclined relative to the first region 381. For example, the second region 382 may include a molding slope surface 3821 extending in an inclined direction with respect to the end surface 3811 of the first region 381.

In an embodiment, the molding part 380 may be extended along the perimeter of the electronic device 300. Since the molding part 380 is extended along the perimeter of the electronic device 300, the molding part 380 may appear in a cross-section perpendicular to the width direction of the electronic device 300 as shown in FIG. 5A and in a cross-section perpendicular to the length direction of the electronic device 300 as shown in FIG. 5B.

In an embodiment, the molding part 380 may be extended substantially in the same shape along the perimeter of the electronic device 300. For example, in the molding part 380, the first region 381 may be extended along the perimeter of the electronic device 300 while having the same length. For example, in the cross-sections illustrated in FIG. 5A and FIG. 5B, the first region 381 may be extended from one surface of the window cover 311 by the first length L1. In the cross-sections illustrated in FIG. 5A and 5B, the molding slope surface 3821 of the second region 382 may be tilted at substantially the same angle relative to a plane parallel to the width direction and length direction of the electronic device 300.

In an embodiment, at least a portion of the first support part 320 and the second support part 330 may be extended along the height direction of the electronic device 300 (e.g., Z-axis direction).

In an embodiment, the first support part 320 may be disposed such that at least a portion thereof faces the end portions of the display part 310 and the molding part 380. For example, with reference to FIGS. 5A and 5B, the first support part 320 may be disposed so that at least a portion thereof faces the display part 310 and the molding part 380 while being spaced apart from the end portions of the display part 310 and the molding part 380. At least a portion of the first support part 320 facing the display part 310 and the molding part 380 may be extended in a direction substantially parallel to the end surface 3811 of the molding part 380.

In an embodiment, the first support part 320 may include a support slope surface 321. With reference to FIGS. 5A and 5B, the support slope surface 321 may be a surface that is extended in an inclined direction with respect to a plane parallel to the width direction and length direction of the electronic device 300 and faces the molding slope surface 3821 of the molding part 380.

In an embodiment, the molding slope surface 3821 may be extended at a greater angle compared to the support slope surface 321 with respect to a plane parallel to the width direction and length direction of the electronic device 300. For example, with reference to FIG. 5A, the molding slope surface 3821 may be inclined at a first angle AG1 relative to a plane parallel to the width direction and length direction of the electronic device 300. The support slope surface 321 may be inclined at a second angle AG2 relative to a plane parallel to the width direction and length direction of the electronic device 300. The first angle AG1 may be formed larger than the second angle AG2. For example, the first angle AG1 may be formed at approximately 60 degrees, and the second angle AG2 may be formed at approximately 45 degrees.

In an embodiment, as the first angle AG1 is formed larger than the second angle AG2, the molding slope surface 3821 may be spaced apart from the support slope surface 321 by a designated distance or more. For example, the molding slope surface 3821 may be spaced apart from the support slope surface 321 by approximately 0.2 mm.

In an embodiment, as the molding slope surface 3821 is disposed to be spaced apart from the support slope surface 321, direct impact of the first support part 320 on the molding part 380 can be reduced or prevented.

In an embodiment, the second support part 330 may be coupled to the molding part 380 at one end. For example, with reference to FIGS. 5A and 5B, the second support part 330 may be coupled to the molding part 380 at an end portion facing in the positive Z-axis direction.

With reference to FIGS. 5A and 5B, in an embodiment, an adhesive member 305 may be disposed between the second support part 330 and the molding part 380. The second support part 330 and the molding part 380 may be coupled by using the adhesive member 305. The adhesive member 305 may include an adhesive material (e.g., bond, double-sided tape).

In an embodiment, at least a portion of the second support part 330 may be disposed in a direction toward the inside of the first support part 320. The direction toward the inside of the first support part 320 may indicate a direction from the first support part 320 toward the inside of the electronic device 300. For example, the direction toward the inside of the first support part 320 in FIG. 5A may be the negative Y-axis direction, and the direction toward the inside of the first support part 320 in FIG. 5B may be the negative X-axis direction.

In an embodiment, the second support part 330 may include a structure for accommodating at least a portion of the first support part 320. For example, the second support part 330 may include a seating portion 331 and/or a coupling space 333. The seating portion 331 and the coupling space 333 may be a structure in which at least a portion of the first support part 320 is disposed.

With reference to FIG. 5A, the seating portion 331 may be a region in which a portion of the second support part 330 is extended to protrude toward the first support part 320 in a direction substantially perpendicular to the height direction of the electronic device 300.

With reference to FIG. 5B, the coupling space 333 may be a space formed by a portion of the second support part 330 being concavely caved in in the height direction of the electronic device 300 (e.g., Z-axis direction).

In an embodiment, at least a portion of the first support part 320 may be seated on the second support part 330 and coupled to the second support part 330. For example, with reference to FIG. 5A, on a cross-section perpendicular to the width direction of the electronic device 300 (e.g., X-axis direction), at least a portion of the first support part 320 may be seated on the seating portion 331 of the second support part 330. With reference to FIG. 5B, on a cross-section perpendicular to the length direction of the electronic device 300 (e.g., Y-axis direction), at least a portion of the first support part 320 may be seated in the coupling space 333 of the second support part 330.

With reference to FIG. 5B, at least a region of the first support part 320 may be extended longer than the remaining region in a direction toward the inside of the electronic device 300 (e.g., negative Y-axis direction in FIG. 5A, negative X-axis direction in FIG. 5B). For example, with reference to FIG. 5B, one end of the first support part 320 may be extended by a third length L3 along the width direction of the electronic device 300 (e.g., X-axis direction), and the other end of the first support part 320 may be extended by a fourth length L4 along the width direction of the electronic device 300 (e.g., X-axis direction). The fourth length L4 may be formed to be longer than the third length L3. For example, the third length L3 may be about 0.7 mm, and the fourth length L4 may be about 1.0 mm. In an embodiment, as the other end of the first support part 320 is extended relatively long, the support slope surface 321 may be formed in a portion of the first support part 320.

In an embodiment, the rigidity of the first support part 320 may be improved as at least a region of the first support part 320 is extended longer than the remaining region in a direction toward the inside of the electronic device 300 (e.g., negative Y-axis direction in FIG. 5A, negative X-axis direction in FIG. 5B). In an embodiment, since only a region of the first support part 320 is extended longer than other regions in a direction toward the inside of the electronic device 300 (e.g., negative Y-axis direction in FIG. 5A, negative X-axis direction in FIG. 5B), the total thickness of the first support part 320 may be not increased.

With reference to FIGS. 5A and 5B, the second support part 330 is depicted as being manufactured as a separate component from the first support part 320 and disposed on the first support part 320, but this may be illustrative. For example, the second support part 330 according to an embodiment may be manufactured as an integral configuration rather than manufactured as a separate configuration from the first support part 320.

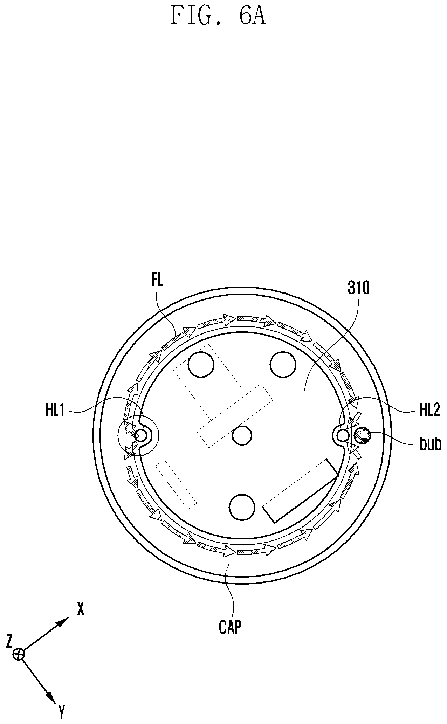

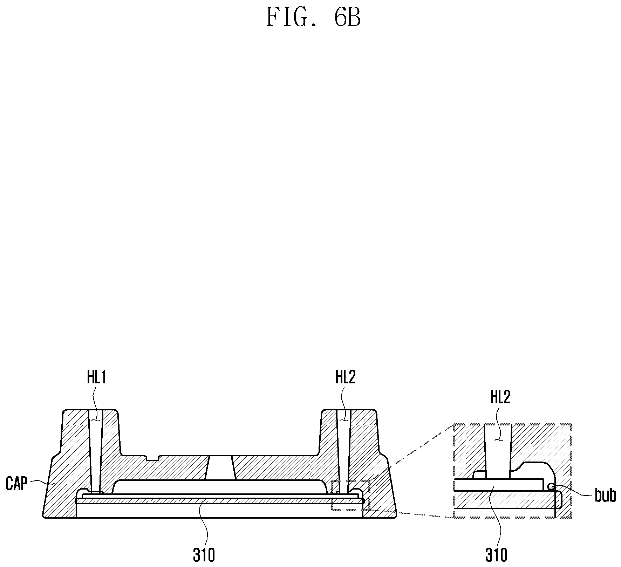

FIG. 6A and FIG. 6B are views illustrating a state in which a guide member CAP is disposed on the display part 310 to form the molding part 380 according to an embodiment of the disclosure.

To form the molding part 380 in the electronic device 300 during the manufacturing process of the electronic device 300 according to an embodiment, the guide member CAP may be disposed on the display part 310 to guide the formation of the molding part 380.

FIGS. 6A and 6B may be views illustrating a state in which the guide member CAP is temporarily disposed on the display part 310 for forming the molding part 380. The guide member CAP may be a member that guides the position where the molding part 380 is formed and is removed after the molding part 380 is completely formed on the electronic device 300. In an embodiment, the guide member CAP may include silicone.

In an embodiment, the guide member CAP may serve to guide the injection and discharge of a molding material (e.g., resin) for forming the molding part 380 into and out of at least a portion of the display part 310. For example, a molding material having fluidity may be disposed along the perimeter of the display part 310 through the guide member CAP and then be cured to form the molding part 380.

In an embodiment, the guide member CAP may include an inlet opening HL1 and/or an outlet opening HL2. The molding material for forming the molding part 380 may be injected toward the display part 310 through the inlet opening HL1 of the guide member CAP. The molding material injected through the inlet opening HL1 may move in a flow direction FL along the perimeter of the display part 310 and be discharged to the outside of the display part 310 through the outlet opening HL2.

The size of the inlet opening HL1 of the guide member CAP, which is used in the process of manufacturing the electronic device 300 according to an embodiment of the disclosure, may be formed smaller compared to the size of the opening of a related-art guide member. For example, the diameter of the inlet opening HL1 of the guide member CAP, which is used in the process of manufacturing the electronic device 300 according to an embodiment, may be 0.7 mm, and the diameter of the opening of the related-art guide member may be 1.0 mm. As the size of the inlet opening HL1 of the guide member CAP is relatively reduced, excessive pressure applied to a portion of the display 312 (e.g., bonding layer such as optically clear adhesive (OCA)) by the molding material injected via the inlet opening HL1 can be reduced or prevented.

During the process of injecting the molding material for forming the molding part 380, air bubbles bub may be formed. For example, with reference to FIGS. 6A and 6B, bubbles bub may be formed around the outlet opening HL2 during the process of forming the molding part 380. If air bubbles bub are formed, it may be difficult to form the molding part 380 in a designated shape.

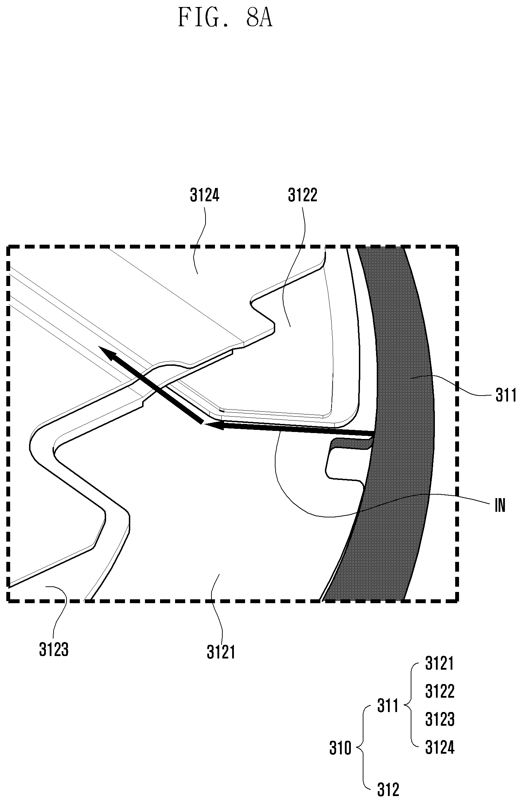

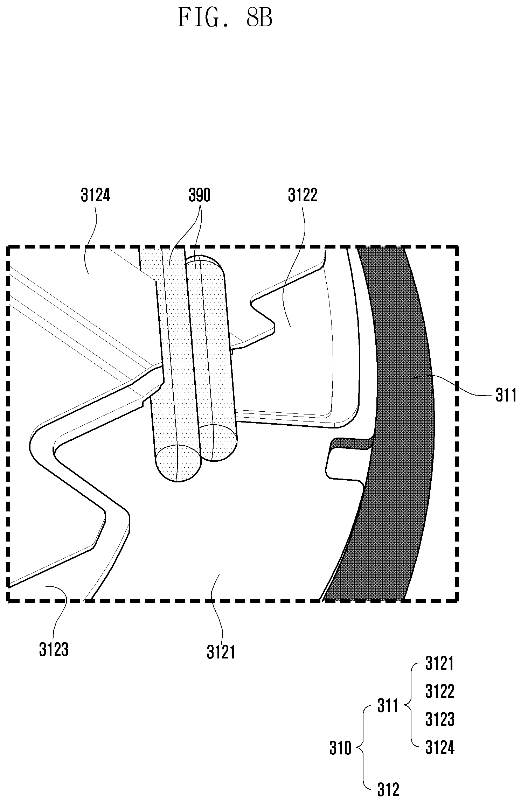

In the electronic device 300 according to an embodiment, a relatively large amount of molding material for forming the molding part 380 may be injected to reduce or prevent the formation of bubbles bub during the manufacturing process of the electronic device 300. When a relatively large amount of molding material is injected, the molding material may flow into the display layer (312, see FIG. 8A). The electronic device 300 according to an embodiment may include a structure (e.g., blocking part 390, see FIG. 8B) that prevents the molding material from moving into the display layer (312, see FIG. 8A).

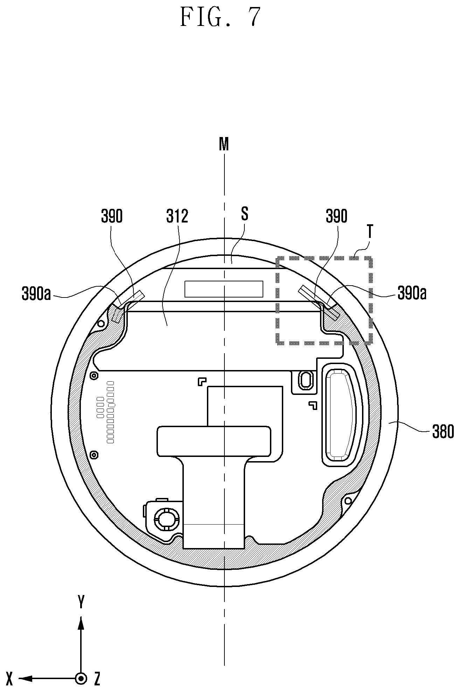

FIG. 7 is a view illustrating the display 312 and blocking part 390 according to an embodiment of the disclosure.

FIG. 7 is a view illustrating a blocking part 390 disposed on the display 312 according to an embodiment.

In an embodiment, the blocking part 390 may serve to reduce or prevent a portion of the molding part 380 from penetrating into the display 312 during the formation process of the molding part 380.

With reference to FIG. 7, the blocking part 390 may be formed such that at least a portion thereof faces at least a portion of the molding part 380. For example, one surface 390a of the blocking part 390 may be formed to face at least a portion of the molding part 380 and to be relatively long compared to other regions of the blocking part 390.

In an embodiment, two blocking parts 390 may be formed on the display 312. The two blocking parts 390 may be formed at positions symmetrical with respect to the imaginary center line M passing through the center point in the width direction of the electronic device 300.

Region S shown in FIG. 7 may refer to the region of the molding part 380 where the bending portion (312a, see FIG. 5a) of the display 312 is located. The two blocking parts 390 may be formed at positions symmetrical with respect to region S.

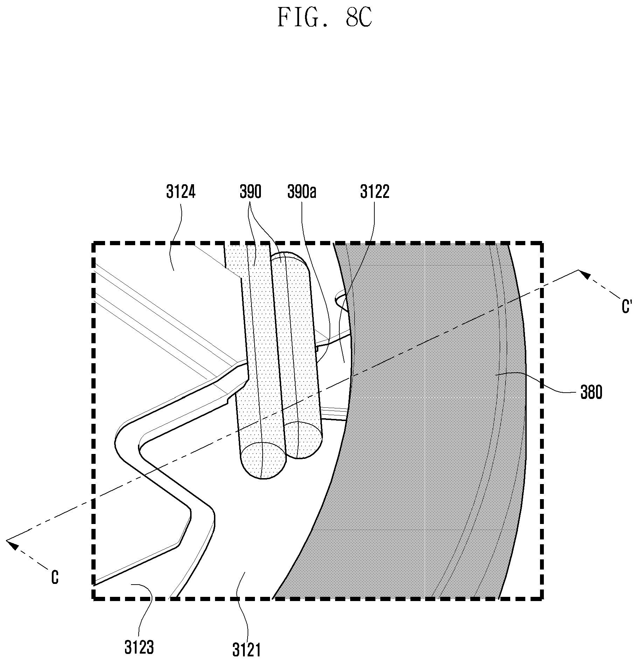

FIG. 8A, FIG. 8B and FIG. 8C are views illustrating the formation of the blocking parts 390 and molding part 380 according to an embodiment of the disclosure.

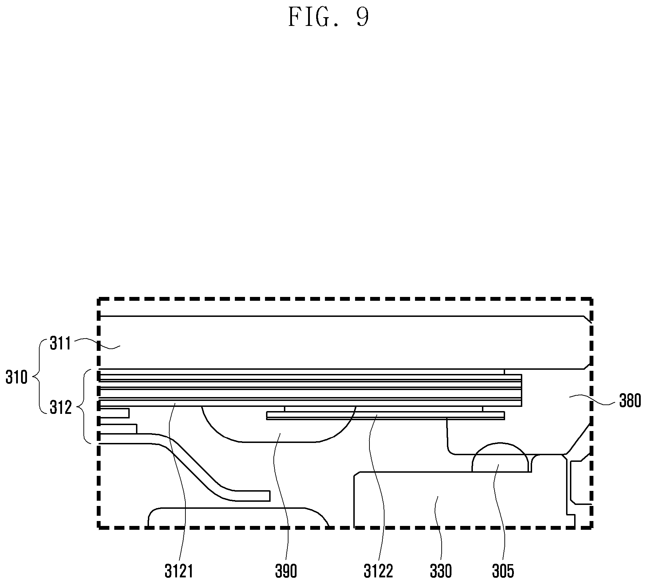

FIG. 9 is a view illustrating the display part 310, molding part 380, and blocking part 390 seen from cross-section C-C' in FIG. 8C.

FIGS. 8A, 8B and 8C are enlarged views of region T shown in FIG. 7. FIG. 8A is a view illustrating the display part 310 before the blocking part 390 and molding part 380 are formed according to an embodiment. FIG. 8B is a view illustrating a state in which the blocking part 390 is formed on the display part 310 according to an embodiment. FIG. 8C is a view illustrating a state in which the blocking part 390 and molding part 380 are formed on the display part 310 according to an embodiment.

In an embodiment, the display 312 may include at least one layer. For example, with reference to FIGS. 8A, 8B and 8C, the display 312 may include a first cover layer 3121, a panel layer 3122, a board layer 3123, and/or a second cover layer 3124. The first cover layer 3121 may be a bonding layer for bonding individual layers within the display 312 and/or a protection layer for protecting the display panel. The panel layer 3122 may be a display panel. The panel layer 3122 illustrated in FIGS. 8A, 8B and 8C may correspond to a region located in the region of the display panel that is bent and extended (e.g., bending portion 312a (see FIG. 5A)). The board layer 3123 may be a layer including a flexible printed circuit board electrically connected to the panel layer 3122. The second cover layer 3124 may be a layer that covers and protects at least some of the panel layer 3122 and the board layer 3123.

During the process of forming the molding part 380 around the display part 310, a portion of the molding part 380 may move into the interior of the display 312. For example, with reference to FIG. 8A, a portion of the molding part 380 may move in a penetration direction IN and be introduced between individual layers (e.g., 3121, 3122, 3123) of the display 312.

In an embodiment, the blocking part 390 may be formed in at least a portion of the interior of the display 312. For example, at least a portion of the blocking part 390 may be formed between individual layers (e.g., 3121, 3122, 3123, 3124) of the display 312.

In an embodiment, the blocking part 390 may serve to reduce or prevent the molding part 380 flowing into the interior of the display 312. The blocking part 390 may reduce or prevent the portion of the molding part 380 moving in the penetration direction IN.

In an embodiment, the blocking part 390 may include a curable fluid material. For example, the blocking part 390 may include an ultra violet (UV) acrylic adhesive. The blocking part 390 including a fluid material may be easily formed between layers of the display 312.

In an embodiment, the blocking part 390 may be disposed such that at least a portion thereof faces at least a portion of the molding part 380. For example, with reference to FIG. 8C, one surface 390a of the blocking part 390 may be formed to face the molding part 380. One surface 390a of the blocking part 390 may be a region that is extended relatively long in one direction compared to other regions of the blocking part 390.

With reference to FIG. 9, the blocking part 390 according to an embodiment may be formed at a distance from the molding part 380. The blocking part 390 may be formed with a gap in an inward direction (e.g., direction from the molding part 380 toward the interior of the electronic device 300).

With reference to FIG. 9, the blocking part 390 may be formed to overlap at least some layers of the display 312. For example, the blocking part 390 may be formed to overlap at least a portion of the first cover layer 3121 and the panel layer 3122.

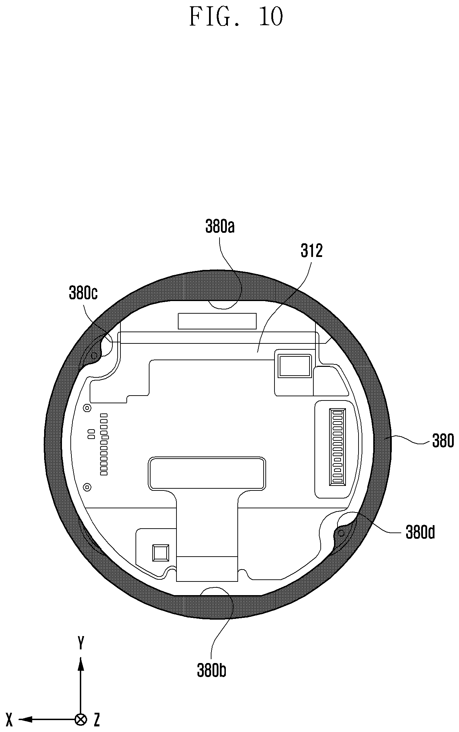

FIG. 10 is a view illustrating the display 312 and molding part 380 according to an embodiment of the disclosure.

With reference to FIG. 10, the molding part 380 according to an embodiment may be extended along the perimeter of the display 312.

In an embodiment, the molding part 380 may include a first molding surface 380a, a second molding surface 380b, a first molding region 380c, and/or a second molding region 380d.

In an embodiment, the first molding surface 380a may be a surface of the molding part 380 formed in a region where the bending portion 312a (see FIG. 5A) of the display 312 is located. The first molding surface 380a may be extended in a direction substantially parallel to the width direction of the electronic device 300 (e.g., X-axis direction).

In an embodiment, the second molding surface 380b may be a surface of the molding part 380 formed on the opposite side of the first molding surface 380a. For example, the second molding surface 380b may be a surface of the molding part 380 formed on the opposite side of the first molding surface 380a with respect to the display 312.

In an embodiment, the second molding surface 380b may be formed to have substantially the same shape as the first molding surface 380a. For example, the second molding surface 380b may be extended in a direction substantially parallel to the width direction of the electronic device 300 (e.g., X-axis direction). The second molding surface 380b may be formed parallel to the first molding surface 380a.

In an embodiment, when the first molding surface 380a and the second molding surface 380b are formed to have substantially the same shape, it is possible to prevent pressure from being concentrated in a specific region of the molding part 380 (e.g., region adjacent to the first molding surface 380a). Pressure is prevented from being concentrated in a specific region of the molding part 380 (e.g., region adjacent to the first molding surface 380a), and excessive pressing on a portion of the display 312 (e.g., bonding layer (optically clear adhesive (OCA)) located around the bending portion 312a) can be reduced or prevented.

In an embodiment, the first molding region 380c may be a region of the molding part 380 formed at a location corresponding to the inlet opening HL1 shown in FIG. 6B. The second molding region 380d may be a region of the molding part 380 formed at a location corresponding to the outlet opening HL2 shown in FIG. 6B.

In an embodiment, the size of the inlet opening HL1 (FIG. 6B) of the guide member CAP (see FIG. 6B) disposed at a position corresponding to the first molding region 380c during the formation process of the molding part 380 may be formed smaller than the size of the opening in a related-art guide member.

In an embodiment, the first molding region 380c may correspond to the outlet opening HL2 in FIG. 6B, and the second molding region 380d may correspond to the inlet opening HL1 in FIG. 6B. In this case, the size of the inlet opening HL1 disposed at a position corresponding to the second molding region 380d may be formed smaller than the size of the opening in a related-art guide member.

An electronic device 300 according to an embodiment of the disclosure may include: support parts 320 and 330 including at least one seating space 3301; a window cover 311 disposed in the seating space 3301; a display 312 that is disposed in the seating space 3301 and one surface of the window cover 311 and includes a bending portion 312a formed at the end portion; and a molding part 380 that is disposed to surround the end portion of the display 312, have at least a portion disposed on one surface of the window cover 311, and be spaced apart from the inner surface of the support parts 320 and 330.

The molding part 380 according to an embodiment of the disclosure may include a first region 381 extended in a direction perpendicular to one surface of the window cover 311, and a second region 382 having at least one surface formed to be inclined with respect to the first region 381.

In an embodiment, the first length L1, which is the length that the first region 381 extends in the height direction of the electronic device 300 from the window cover 311, may be formed longer than the second length L2, which is the length from the window cover 311 to the center of the bending portion 312.

In an embodiment, the support parts 320 and 330 may include a support slope surface 321 that is formed to be extended with inclination relative to the window cover 311 and face the second region 382 of the molding part 380.

In an embodiment, the second region 382 of the molding part 380 may include a molding slope surface 3821 facing the support slope surface 321.

In an embodiment, the first angle AG1 of the molding slope surface 3821 may be formed to be greater than the second angle AG2 of the support slope surface 321.

In an embodiment, the molding part 380 may be formed to extend along the perimeter of the electronic device 300 while being spaced apart from the inner surface of the support parts 320 and 330.

In an embodiment, the display 312 may include a panel layer 3122 including a display panel, a first cover layer 3121 disposed in one direction of the panel layer 3122, and a second cover layer 3124 disposed in the other direction of the panel layer 3122.

In an embodiment, the electronic device 300 may include a blocking part 390 having at least a portion formed between the panel layer 3122, the first cover layer 3121, and the second cover layer 3124.

In an embodiment, the blocking part 390 may block a portion of the molding part 380 from flowing into the interior of the display 312 during the formation process of the molding part 380.

In an embodiment, the blocking part 390 may be extended so that at least a portion thereof faces at least a portion of the molding part 380.

In an embodiment, the support parts 320 and 330 may include a first support part 320 disposed to be spaced apart from the molding part 380, and a second support part 330 on which at least a portion of the first support part 320 is seated.

In an embodiment, at least a region of the first support part 320 and 330 may be extended longer than the remaining regions in a direction toward the interior of the electronic device 300.

In an embodiment, the second support part 330 may be extended to protrude toward the first support part 320 in a direction perpendicular to the height direction of the electronic device 300 and may include a seating portion 331 on which at least a portion of the first support part 320 is seated.

In an embodiment, the first support part 320 and the second support part 330 may be manufactured and formed as one piece.

In an embodiment, **the electronic device 300** may include an adhesive member 305 that is disposed between the second support part 330 and the molding part 380 to couple the second support part 330 and the molding part 380 together.

In an embodiment, the molding part 380 may include a first molding surface 380a, which is a surface of the molding part 380 formed in a region where the bending portion 312a of the display 312 is located, and a second molding surface 380b formed on the opposite side of the first molding surface 380a.

In an embodiment, the first molding surface 380a and the second molding surface 380b may be formed parallel to each other.

In an embodiment, the electronic device 300 may be a wearable electronic device that can be attached to or detached from a body part of the user.

An electronic device 300 according to an embodiment of the disclosure may include: a display part 310 including a bending portion 312a formed at an end portion; support parts 320 and 330 disposed to surround the outer perimeter of the display part 310; and a molding part 380 that is disposed to surround the end portion of the display part 310 and be spaced apart from the inner surface of the support parts 320 and 330, wherein the molding part 380 may include a first region 381 extended in a direction perpendicular to one surface of the display part 310, and a second region 382 including a molding slope surface 3821 formed to be inclined relative to the first region 381, wherein the support parts 320 and 330 may include a support slope surface 321 facing the second region of the molding part 380, wherein the first region 381 may be extended from one surface of the display part 310 to a greater distance than the center of the bending portion 312a in the height direction of the electronic device 300, and wherein the first angle AG1 of the molding slope surface 3821 may be formed to be larger than the second angle AG2 of the support slope surface 321.

In an embodiment, the display part 310 may include a window cover 311 disposed at the outermost edge of the display part 310.

The electronic device according to an embodiment of the disclosure may be one of various types of devices. The electronic device may include, for example, a portable communication device (e.g., smartphone), a computer device, a portable multimedia device, a portable medical instrument, a camera, a wearable device, or a home appliance. The electronic device according to an embodiment of the disclosure is not limited to those described above.

Embodiments of the disclosure and terms used therein are not intended to limit the technical features described in the disclosure to specific embodiments, and should be understood as including various modifications, equivalents, or substitutes of a corresponding embodiment. With regard to the description of the drawings, similar reference numerals may be used to refer to similar or related elements. A singular form of a noun corresponding to a specific item may include one or multiple instances of the item unless the relevant context clearly indicates otherwise. In this disclosure, each of phrases such as "A or B", "at least one of A and B", "at least one of A or B", "A, B or C", "at least one of A, B and C", and "at least one of A, B or C" may include any one of or all possible combinations of the items enumerated together in the corresponding one of the phrases. Terms such as "1st" and "2nd", or "first" and "second" may be used to simply distinguish a corresponding component from another, and does not limit the components in other aspect (e.g., importance or order). When an element (e.g., first element) is referred to, with or without the term "operably" or "communicatively", as "coupled to/with" or "connected to/with" another element (e.g., second element), this means that the element may be connected or coupled to the other element directly (e.g., wiredly), wirelessly, or via a third element.

The term "module" used in an embodiment of this disclosure may include a unit implemented in hardware, software, or firmware, and may be used interchangeably with other terms, for example, "logic", "logic block", "component", or "circuit". A module may be a single integral component, or a minimum unit or part thereof performing one or more functions. For example, according to an embodiment, a module may be implemented in a form of an application-specific integrated circuit (ASIC).

An embodiment of this disclosure may be implemented as software (e.g., programs 140) including one or more instructions that are stored in a storage medium (e.g., internal memory 136 or external memory 138) readable by a machine (e.g., electronic device 101). For example, a processor (e.g., processor 120) of the machine (e.g., electronic device 101) may invoke at least one of the one or more instructions stored in the storage medium to execute it. This allows the machine to be operated to perform at least one function according to the invoked at least one instruction. The one or more instructions may include a code generated by a complier or a code executable by an interpreter. The machine-readable storage medium may be provided in the form of a non-transitory storage medium. Here, the term "non-transitory" simply means that the storage medium is a tangible device and does not include a signal (e.g., electromagnetic wave), but this term does not distinguish whether data is stored semi-permanently or temporarily in the storage medium.

According to an embodiment, a method according to various embodiments of this disclosure may be provided by being included in a computer program product. The computer program product may be traded as a commodity between a seller and a purchaser. A computer program product may be distributed in the form of a machine-readable storage medium (e.g., compact disc read only memory (CD-ROM)) or be distributed online (e.g., download or upload) directly between two user devices (e.g., smartphones) through an application store (e.g., PlayStore ^{™}). For on-line distribution, at least a portion of the computer program product may be temporarily stored or temporarily created in a machine readable storage medium such as a memory of a manufacturer's server, an application store's server, or a relay server.

According to an embodiment, each component (e.g., module or program) of the above-described components may include a single entity or multiple entities, and some of the multiple entities may be separately arranged on other components. According to various embodiments, one or more components or operations may be omitted from the above-described components, or one or more other components or operations may be added. Alternatively or additionally, a plurality of components (e.g., modules or programs) may be integrated into a single component. In this case, the integrated component may perform one or more functions of each of the plurality of components in the same or similar manner as they are performed by a corresponding one of the plurality of components before the integration.

According to an embodiment, operations performed by a module, a program, or another component may be carried out in sequence, in parallel, by repetition, or heuristically, or one or more of the operations may be executed in a different order or may be omitted, and one or more other operations may be added.

## Claims

1. An electronic device comprising:
support parts (320, 330) including at least one seating space (3301);
a window cover (311) disposed in the seating space;
a display (312) that is disposed in the seating space and one surface of the window cover and includes a bending portion (312a) formed at an end portion; and
a molding part (380) that is disposed to surround the end portion of the display, have at least a portion disposed on one surface of the window cover, and be spaced apart from an inner surface of the support parts,
wherein the molding part includes a first region (381) extended in a direction perpendicular to one surface of the window cover, and a second region (382) having at least one surface formed to be inclined with respect to the first region,
wherein a first length (L1), which is a length that the first region extends in a height direction of the electronic device from the window cover, is formed longer than a second length (L2), which is a length from the window cover to a center of the bending portion.

2. The electronic device of claim 1, wherein the support parts include a support slope surface (321) that is formed to be extended with inclination relative to the window cover and face the second region of the molding part.

3. The electronic device of claim 2, wherein:
the second region of the molding part includes a molding slope surface (3821) facing the support slope surface; and
a first angle (AG1) of the molding slope surface is formed to be greater than a second angle (AG2) of the support slope surface.

4. The electronic device of claim 1, wherein the molding part is formed to extend along a perimeter of the electronic device while being spaced apart from an inner surface of the support parts.

5. The electronic device of claim 1, wherein:
the display includes a panel layer (3122) including a display panel, a first cover layer (3121) disposed in one direction of the panel layer, and a second cover layer (3124) disposed in the other direction of the panel layer; and
the electronic device further comprises a blocking part (390) having at least a portion formed between the panel layer, the first cover layer, and the second cover layer.

6. The electronic device of claim 5, wherein the blocking part blocks a portion of the molding part from flowing into an interior of the display during a formation process of the molding part.

7. The electronic device of claim 5, wherein the blocking part is extended in a manner that at least a portion thereof faces at least a portion of the molding part.

8. The electronic device of claim 1, wherein the support parts include a first support part (320) disposed to be spaced apart from the molding part, and a second support part (330) on which at least a portion of the first support part is seated.

9. The electronic device of claim 8, wherein at least a region of the first support part is extended longer than the remaining regions in a direction toward an interior of the electronic device.

10. The electronic device of claim 8, wherein the second support part is extended to protrude toward the first support part in a direction perpendicular to a height direction of the electronic device and includes a seating portion (331) on which at least a portion of the first support part is seated.

11. The electronic device of claim 8, wherein the first support part and the second support part are manufactured and formed as one piece.

12. The electronic device of claim 8, further comprising an adhesive member (305) that is disposed between the second support part and the molding part to couple the second support part and the molding part together.

13. The electronic device of claim 1, wherein:
the molding part includes a first molding surface (380a), which is a surface of the molding part formed in a region where the bending portion of the display is located, and a second molding surface (380b) formed on an opposite side of the first molding surface; and
the first molding surface and the second molding surface are formed parallel to each other.

14. The electronic device of claim 1, wherein the electronic device is a wearable electronic device capable of being attached to or detached from a body portion of a user.

15. A wearable electronic device comprising:
a display part (310) including a bending portion (312a) formed at an end portion;
support parts (320, 330) disposed to surround an outer perimeter of the display part; and
a molding part (380) that is disposed to surround the end portion of the display part and be spaced apart from an inner surface of the support parts,
wherein the molding part includes a first region (381) extended in a direction perpendicular to one surface of the display part, and a second region (382) including a molding slope surface (3821) formed to be inclined relative to the first region,
wherein the support parts include a support slope surface (321) facing the second region of the molding part,
wherein the first region is extended from one surface of the display part to a greater distance than a center of the bending portion in a height direction of the electronic device,
wherein a first angle (AG1) of the molding slope surface is formed to be larger than a second angle (AG2) of the support slope surface.
